(19) Europäisches Patentamt / European Patent Office / Office européen des brevets

(11) **EP 4 118 786 B1**

(12) **EUROPEAN PATENT SPECIFICATION**

(45) Date of publication and mention of the grant of the patent:
**04.03.2026 Bulletin 2026/10**

(21) Application number: **21775938.0**

(22) Date of filing: **26.03.2021**

(51) International Patent Classification (IPC):
**H04L 5/00** (2006.01)    **H04W 72/23** (2023.01)
**H04W 72/30** (2023.01)

(52) Cooperative Patent Classification (CPC):
**H04L 5/0053; H04L 5/0091; H04W 72/23;**
H04L 5/0007; H04W 72/30

(86) International application number:
**PCT/CN2021/083427**

(87) International publication number:
**WO 2021/190648 (30.09.2021 Gazette 2021/39)**

(54) **USER EQUIPMENT AND METHOD FOR MULTICAST/BROADCAST SERVICE**

BENUTZERGERÄT UND VERFAHREN FÜR MULTICAST-/BROADCAST-DIENST

ÉQUIPEMENT UTILISATEUR ET PROCÉDÉ POUR SERVICE DE MULTIDIFFUSION/DIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2020 US 202063001223 P**
**27.03.2020 US 202063001197 P**

(43) Date of publication of application:
**18.01.2023 Bulletin 2023/03**

(73) Proprietor: **Sharp Kabushiki Kaisha**
**Sakai-shi, Osaka 590-8522 (JP)**

(72) Inventors:
 • **LIN, Chiahung**
   Taiwan (TW)
 • **SHIH, Meiju**
   Taiwan (TW)
 • **CHEN, Hungchen**
   Taiwan (TW)
 • **CHOU, Chieming**
   Taiwan (TW)
 • **YU, Chiahao**
   Taiwan (TW)

(74) Representative: **Müller-Boré & Partner**
**Patentanwälte PartG mbB**
**Friedenheimer Brücke 21**
**80639 München (DE)**

(56) References cited:
EP-A1- 2 830 237      WO-A1-2018/204886
WO-A1-2021/139747    WO-A1-2021/162807
CN-A- 110 324 127     CN-A- 110 536 447
CN-A- 110 612 690     US-A1- 2011 170 472

• NOKIA CORPORATION ET AL: "PDCCH signalling for MBMS paging", 3GPP DRAFT; R2-094571_MRNTI_PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Shenzhen, China; 20090817, 17 August 2009 (2009-08-17), XP050352691
• NTT DOCOMO, INC.: "Discussion on CORESET0", 3GPP DRAFT; R1-1813934 DISCUSSION ON CORESET0_REV04, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Spokane, USA; 20181112 - 20181116, 13 November 2018 (2018-11-13), Mobile Competence Centre ; 650, route des Lucioles ; F-06921 Sophia-Antipolis Cedex ; France, XP051480138

**Description**

FIELD

The present disclosure is related to wireless communication and, more specifically, to a method for Multicast/Broadcast Services (MBS) performed by a user equipment, and a user equipment.

BACKGROUND

Various efforts have been made to improve different aspects of wireless communication for cellular wireless communication systems, such as fifth-generation (5G) New Radio (NR), by improving data rate, latency, reliability, and mobility. The 5G NR system is designed to provide flexibility and configurability to optimize the network services and types, accommodating various use cases such as enhanced Mobile Broadband (eMBB), massive Machine-Type Communication (mMTC), and Ultra-Reliable and Low-Latency Communication (URLLC). However, as the demand for radio access continues to increase, there exists a need for further improvements in the art.

US 2011/170472 describes a method for allocating physical layer control information for multimedia broadcast multicast service (MBMS) including generating physical layer control information for MBMS, and allocating the physical layer control information to a common search space and a specific search space. In the method, allocating the physical layer control information may include: allocating physical layer control information for common control information in MBMS control information for a mobile station using the MBMS to the common search space; and allocating physical layer control information for MBMS traffic information or physical layer control information for non-common control information in the MBMS control information to the specific search space.

EP 2 830 237 A1 describes a method for transmitting a multicast broadcast single frequency network (MBSFN) subframe, including: configuring, by a base station (BS), at least one subframe, among a plurality of subframes included in a downlink radio frame, to an MBSFN subframe; determining, by the BS, resource allocation with respect to a tracking reference signal in the at least one configured MBSFN subframe based on whether a physical multicast channel is transmitted in the at least one configured MBSFN subframe; and transmitting, by the BS, the tracking reference signal through an MBSFN subframe in which the PMCH is not transmitted among the at least one configured MBSFN subframe.

SUMMARY

The above and other objects are achieved by a method for Multicast/Broadcast Services (MBS) performed by a user equipment, and a user equipment, as defined in the independent claims respectively. Preferred embodiments are set forth in the dependent claims.

BRIEF DESCRIPTION OF THE DRAWINGS

Aspects of the present disclosure are best understood from the following detailed disclosure when read with the accompanying drawings. Various features are not drawn to scale. Dimensions of various features may be arbitrarily increased or reduced for clarity of discussion.

FIG. 1A is a diagram illustrating PDCCH monitoring with a group-common RNTI in an MBS scenario according to an example implementation of the present disclosure.
FIG. 1B is a diagram illustrating PDCCH monitoring with a UE-specific RNTI in an MBS scenario according to an example implementation of the present disclosure.
FIG. 2 is a flowchart illustrating a method for MBS performed by a UE according to an example implementation of the present disclosure.
FIG. 3 is a flowchart illustrating a method for MBS performed by a UE according to another example implementation of the present disclosure.
FIG. 4 is a flowchart illustrating a method for MBS performed by a UE according to still another example implementation of the present disclosure.
FIG. 5 is a block diagram illustrating a node for wireless communication according to an example implementation of the present disclosure.

DESCRIPTION

Some of the abbreviations used in this disclosure include:

| Abbreviation | Full name |
| --- | --- |
| 3GPP | $3^{rd}$ Generation Partnership Project |
| 5G | $5^{th}$ Generation |
| ACK | Acknowledgment |
| AS | Access Stratum |
| BS | Base Station |
| BWP | Bandwidth Part |
| C-RNTI | Cell Radio Network Temporary Identifier |
| CA | Carrier Aggregation |
| CG | Configured Grant |
| CORESET | Control Resource Set |
| CMAS | Commercial Mobile Alerting System |
| CRC | Cyclic Redundancy Check |
| CS-RNTI | Configured Scheduling Radio Network Temporary Identifier |
| CSS | Common Search Space |
| DC | Dual Connectivity |
| DCI | Downlink Control Information |
| DL | Downlink |
| DMRS | Demodulation Reference Signal |
| DRX | Discontinuous Reception |
| E-UTRA | Evolved Universal Terrestrial Radio Access |
| ETWS | Earthquake and Tsunami Warning System |
| FR | Frequency Range |
| G-RNTI | Group RNTI |
| HARQ | Hybrid Automatic Repeat Request |
| HARQ-ACK | HARQ Acknowledgement |
| ID | Identifier |
| IE | Information Element |
| IoT | Internet of Things |
| IP | Internet Protocol |
| LTE | Long Term Evolution |
| M-RNTI | MBMS RNTI |
| MAC | Medium Access Control |
| MAC CE | MAC Control Element |
| MBMS | Multimedia Broadcast/Multicast Service |
| MBS | Multicast/Broadcast Service |
| MCG | Master Cell Group |
| MCS | Modulation Coding Scheme |
| MCS-C-RNTI | Modulation Coding Scheme Cell Radio Network Temporary Identifier |
| MIB | Master Information Block |
| MIMO | Multi-Input Multi-Output |
| MN | Master Node |
| NACK | Negative Acknowledgment |
| NDI | New Data Indicator |
| NR | New Radio |
| NW | Network |
| OFDM | Orthogonal Frequency Division Multiplexing |
| P-RNTI | Paging RNTI |
| PCell | Primary Cell |
| PDCCH | Physical Downlink Control Channel |
| PDCP | Packet Data Convergence Protocol |
| PDSCH | Physical Downlink Shared Channel |

(continued)

| Abbreviation | Full name |
|---|---|
| PDU | Protocol Data Unit |
| PHY | Physical (layer) |
| PRACH | Physical Random Access Channel |
| PRB | Physical Resource Block |
| PTM | Point To Multipoint |
| PTP | Point To Point |
| PUCCH | Physical Uplink Control Channel |
| PUSCH | Physical Uplink Shared Channel |
| QAM | Quadrature Amplitude Modulation |
| QPSK | Quadrature Phase Shift Keying |
| RA | Random Access |
| RA-RNTI | Random Access RNTI |
| RAN | Radio Access Network |
| RAR | Random Access Response |
| RB | Resource Block |
| RF | Radio Frequency |
| RLC | Radio Link Control |
| RNTI | Radio Network Temporary Identifier |
| RRC | Radio Resource Control |
| RS | Reference Signal |
| RSRP | Reference Signal Received Power |
| SC-RNTI | Single Cell RNTI |
| SCell | Secondary Cell |
| SCG | Secondary Cell Group |
| SCS | Subcarrier Spacing |
| SDU | Service Data Unit |
| SFI-RNTI | Slot Format Indication RNTI |
| SFN | System Frame Number |
| SI-RNTI | System Information RNTI |
| SIB | System Information Block |
| SN | Secondary Node |
| SS-RSRP | Synchronization Signal Reference Signal Received Power |
| SSB | Synchronization Signal Block |
| TB | Transport Block |
| TMGI | Temporary Mobile Group Identifier |
| TPC | Transmission Power Control |
| TS | Technical Specification |
| UE | User Equipment |
| UL | Uplink |
| VRB | Virtual Resource Block |

The following contains specific information related to implementations of the present disclosure. The drawings and their accompanying detailed disclosure are merely directed to implementations. However, the present disclosure is not limited to these implementations. Other variations and implementations of the present disclosure will be obvious to those skilled in the art.

Unless noted otherwise, like or corresponding elements among the drawings may be indicated by like or corresponding reference numerals. Moreover, the drawings and illustrations in the present disclosure are generally not to scale and are not intended to correspond to actual relative dimensions.

For the purposes of consistency and ease of understanding, like features may be identified (although, in some examples, not illustrated) by the same numerals in the drawings. However, the features in different implementations may be different in other respects and shall not be narrowly confined to what is illustrated in the drawings.

The phrases "in one implementation," or "in some implementations," may each refer to one or more of the same or different implementations. The term "coupled" is defined as connected, whether directly or indirectly via intervening components, and is not necessarily limited to physical connections. The term "comprising" means "including, but not necessarily limited to" and specifically indicates open-ended inclusion or membership in the so-disclosed combination, group, series, or equivalent. The expression "at least one of A, B and C" or "at least one of the following: A, B and C" means "only A, or only B, or only C, or any combination of A, B and C."

The terms "system" and "network" may be used interchangeably. The term "and/or" is only an association relationship for describing associated objects and represents that three relationships may exist such that A and/or B may indicate that A exists alone, A and B exist at the same time, or B exists alone. The character "/" generally represents that the associated objects are in an "or" relationship.

For the purposes of explanation and non-limitation, specific details such as functional entities, techniques, protocols, and standards are set forth for providing an understanding of the disclosed technology. In other examples, detailed disclosure of well-known methods, technologies, systems, and architectures are omitted so as not to obscure the present disclosure with unnecessary details.

Persons skilled in the art will immediately recognize that any network function(s) or algorithm(s) disclosed may be implemented by hardware, software, or a combination of software and hardware. Disclosed functions may correspond to modules which may be software, hardware, firmware, or any combination thereof.

A software implementation may include computer-executable instructions stored on a computer-readable medium, such as memory or other type of storage devices. One or more microprocessors or general-purpose computers with communication processing capability may be programmed with corresponding executable instructions and perform the disclosed network function(s) or algorithm(s).

The microprocessors or general-purpose computers may include Application-Specific Integrated Circuitry (ASIC), programmable logic arrays, and/or one or more Digital Signal Processor (DSPs). Although some of the disclosed implementations are oriented to software installed and executing on computer hardware, alternative implementations implemented as firmware, as hardware, or as a combination of hardware and software are well within the scope of the present disclosure. The computer readable medium includes but is not limited to Random Access Memory (RAM), Read Only Memory (ROM), Erasable Programmable Read-Only Memory (EPROM), Electrically Erasable Programmable Read-Only Memory (EEPROM), flash memory, Compact Disc Read-Only Memory (CD-ROM), magnetic cassettes, magnetic tape, magnetic disk storage, or any other equivalent medium capable of storing computer-readable instructions.

A radio communication network architecture such as a Long-Term Evolution (LTE) system, an LTE-Advanced (LTE-A) system, an LTE-Advanced Pro system, or a 5G NR Radio Access Network (RAN) typically includes at least one base station (BS), at least one UE, and one or more optional network elements that provide connection within a network. The UE communicates with the network such as a Core Network (CN), an Evolved Packet Core (EPC) network, an Evolved Universal Terrestrial RAN (E-UTRAN), a 5G Core (5GC), or an internet via a RAN established by one or more BSs.

A UE may include but is not limited to a mobile station, a mobile terminal or device, or a user communication radio terminal. The UE may be a portable radio equipment that includes but is not limited to a mobile phone, a tablet, a wearable device, a sensor, a vehicle, or a Personal Digital Assistant (PDA) with wireless communication capability. The UE is configured to receive and transmit signals over an air interface to one or more cells in a RAN.

The BS may be configured to provide communication services according to at least a Radio Access Technology (RAT) such as Worldwide Interoperability for Microwave Access (WiMAX), Global System for Mobile communications (GSM) that is often referred to as 2G, GSM Enhanced Data rates for GSM Evolution (EDGE) RAN (GERAN), General Packet Radio Service (GPRS), Universal Mobile Telecommunication System (UMTS) that is often referred to as 3G based on basic wideband-code division multiple access (W-CDMA), high-speed packet access (HSPA), LTE, LTE-A, evolved LTE (eLTE) that is LTE connected to 5GC, NR (often referred to as 5G), and/or LTE-A Pro. However, the present disclosure is not limited to these protocols.

The BS may include but is not limited to a node B (NB) in the UMTS, an evolved node B (eNB) in LTE or LTE-A, a radio network controller (RNC) in UMTS, a BS controller (BSC) in the GSM/GERAN, an ng-eNB in an Evolved Universal Terrestrial Radio Access (E-UTRA) BS in connection with 5GC, a next generation Node B (gNB) in the 5G-RAN, or any other apparatus capable of controlling radio communication and managing radio resources within a cell. The BS may serve one or more UEs via a radio interface.

The BS is operable to provide radio coverage to a specific geographical area using a plurality of cells forming the RAN. The BS supports the operations of the cells. Each cell is operable to provide services to at least one UE within its radio coverage.

Each cell (often referred to as a serving cell) provides services to serve one or more UEs within its radio coverage such that each cell schedules the DL and optionally UL resources to at least one UE within its radio coverage for DL and optionally UL packet transmissions. The BS can communicate with one or more UEs in the radio communication system via the plurality of cells.

A cell may allocate sidelink (SL) resources for supporting Proximity Service (ProSe) or Vehicle to Everything (V2X) service. Each cell may have overlapped coverage areas with other cells.

In Multi-RAT Dual Connectivity (MR-DC) cases, the primary cell of a Master Cell Group (MCG) or a Secondary Cell Group (SCG) may be called a Special Cell (SpCell). A Primary Cell (PCell) may refer to the SpCell of an MCG. A Primary SCG Cell (PSCell) may refer to the SpCell of an SCG. MCG may refer to a group of serving cells associated with the Master Node (MN), including the SpCell and optionally one or more Secondary Cells (SCells). An SCG may refer to a group of serving cells associated with the Secondary Node (SN), including the SpCell and optionally one or more SCells.

As previously disclosed, the frame structure for NR supports flexible configurations for accommodating various next generation (e.g., 5G) communication requirements such as Enhanced Mobile Broadband (eMBB), Massive Machine Type Communication (mMTC), and Ultra-Reliable and Low-Latency Communication (URLLC), while fulfilling high reliability, high data rate, and low latency requirements. The Orthogonal Frequency-Division Multiplexing (OFDM) technology in the 3GPP may serve as a baseline for an NR waveform. The scalable OFDM numerology such as adaptive sub-carrier spacing, channel bandwidth, and Cyclic Prefix (CP) may also be used.

Two coding schemes are considered for NR, specifically Low-Density Parity-Check (LDPC) code and Polar Code. The coding scheme adaption may be configured based on channel conditions and/or service applications.

At least DL transmission data, a guard period, and a UL transmission data should be included in a transmission time interval (TTI) of a single NR frame. The respective portions of the DL transmission data, the guard period, and the UL transmission data should also be configurable based on, for example, the network dynamics of NR. SL resources may also be provided in an NR frame to support ProSe services or V2X services.

Examples of some selected terms are provided as follows.

TMGI: A radio resource efficient mechanism for identifying an MBMS Bearer Service (as opposed to using the IP Multicast Address and Access Point Name).

RNTI: RNTIs are used to differentiate/identify a connected UE in the cell, a specific radio channel, a group of UEs in case of paging, a group of UEs for which power control is issued by the gNB, and/or system information transmitted for all the UEs by a 5G gNB.

DCI: There are various DCI formats used in the PDCCH. The DCI format is a predefined format in which the downlink control information is packed/formed and transmitted in the PDCCH.

HARQ: A functionality that ensures delivery between peer entities at Layer 1 (e.g., PHY Layer). A single HARQ process may support one TB when the PHY layer is not configured for DL/UL spatial multiplexing. A single HARQ process may support one or multiple TBs when the PHY layer is configured for DL/UL spatial multiplexing. There may be one HARQ entity per serving cell. Each HARQ entity may support parallel processing of (e.g., multiple) DL and UL HARQ processes.

BWP: A subset of the total cell bandwidth of a cell. Bandwidth Adaptation (BA) may be achieved by configuring the UE with BWP(s) and telling the UE which of the configured BWPs is currently the active one. To enable BA on the PCell, a BS (e.g., a gNB) may configure the UE with UL BWP(s) and DL BWP(s). To enable BA on SCells in case of CA, the BS may configure the UE with DL BWP(s) at least (which means there may be no UL BWP configured to the UE). For the PCell, the initial BWP may be the BWP used for initial access. For the SCell(s), the initial BWP may be the BWP configured to the UE to first operate during the SCell activation process. The UE may be configured with a first active uplink BWP via *a firstActiveUplinkBWP* IE field. If the first active uplink BWP is configured for an SpCell, the *firstActiveUplinkBWP* IE field may contain the ID of the UL BWP to be activated upon performing the RRC (re-)configuration. If the field is absent, the RRC (re-)configuration may not trigger a BWP switch. If the first active uplink BWP is configured for an SCell, the *firstActiveUplinkBWP* IE field may contain the ID of the UL BWP to be used upon MAC-activation of the SCell.

In Rel-15 and Rel-16 NR, no multicast/broadcast services (MBS) support is specified. Since MBS can provide benefit in regard to system efficiency and user experience, MBS is decided to be a new work item (WI) in Rel-17 NR in RAN#86. This WI aims to provide support in NR for several use cases, e.g., public safety, mission-critical services, V2X applications, transparent IPv4/IPv6 multicast delivery, IPTV, software delivery over wireless, group communications and IoT applications.

Multimedia broadcast/multicast service (MBMS) is an important feature for LTE. In MBMS, the spectral efficiency requirement is given in terms of a carrier dedicated to broadcast transmission. However, LTE MBMS does not support dynamically adjusting resource allocation according to MBMS-interested UEs' status, e.g., channel condition. In addition, the resource dedicatedly allocated for the MBMS service cannot be released for other data transmission even though no UEs are needing MBMS services, which results in resource wasting. Under such conditions, Release-13 LTE discusses a new feature, Single-Cell Point-to-Multipoint (SC-PTM), to provide more flexible multicast/broadcast data transmission. SC-PTM leverages MBMS system architecture and enhances not only radio efficiency but also latency compared with conventional MBMS. Unlike MBMS that uses the pre-reserved resources for multicast/broadcast services, SC-PTM transfers MBS data via PDSCH addressed to a Group-RNTI (or G-RNTI). Therefore, the radio resources for MBS can be dynamically assigned in time/frequency via a PDCCH in SC-PTM.

The LTE system has built the above-mentioned features, including MBMS and SC-PTM, to support MBS. In NR, there is still no MBS support specified in the first two NR releases, including Release-15 and Release-16. In order to support MBS in NR, a new work item on NR MBS has been approved in the upcoming Release-17 discussion. The main objectives of Release-17 NR MBS are given below:

[0037]   - Specify a group scheduling mechanism to allow UEs to receive Broadcast/Multicast service

- Specify support for dynamic change of Broadcast/Multicast service delivery between multicast (PTM) and unicast (PTP) with service continuity for a given UE
- Specify support for basic mobility with service continuity
- Specify required changes to improve reliability of Broadcast/Multicast service, e.g., by UL feedback. The level of reliability should be based on the requirements of the application/service provided
- Study the support for dynamic control of the Broadcast/Multicast transmission area within one gNB distributed unit (gNB-DU) and specify what is needed to enable it, if anything
- Specify RAN basic functions for broadcast/multicast for UEs in RRC_IDLE/ RRC_INACTIVE states

As mentioned previously, there are many objectives for MBS in Release-17 NR. In the present disclosure, the control mechanisms are disclosed for NR MBS. The control mechanisms may need to provide enough flexibility to implement possible solutions for the issues raised from the objectives of Release-17 NR MBS WID. In addition, the control mechanisms may be designed based on the Release-15/Release-16 control mechanisms to ensure that they can be easily applied to the current NR framework.

**Issue #1: Broadcast/multicast services related control mechanism**

Since there are no broadcast/multicast services support specified in the Release-15 or Release-16 NR, it may be required to consider how to reuse the Release-15 and Release-16 control mechanisms for the MBS, consider the new characteristics introduced in NR, and/or consider how to design a new control mechanism for the MBS. Therefore, dynamic control mechanisms are disclosed in the present disclosure, including implementations about CORESET, search space, resource allocation, and DCI format for MBS operation.

**CORESET for MBS**

In some implementations, if the network configures multiple CORESETs per BWP per cell to a UE (e.g., a UE interested in a certain MBS or an MBS-capable UE), one or more CORESET(s) may be dedicatedly used for the MBS. The multiple configured CORESETs may include UE-specific CORESET(s), common CORESET(s), and MBS-specific CORESET(s). In one implementation, the UE may receive an RRC message that indicates a CORESET dedicated for the MBS from a BS. The UE may monitor a PDCCH in the CORESET dedicated for the MBS for MBS-related control information. In one implementation, the RRC message may further indicate a BWP dedicated for the MBS (also referred to as the MBS BWP in the present disclosure). The CORESET dedicated for the MBS may be in the BWP dedicated for the MBS.

For example, the network may configure 6 CORESETs in the MBS BWP, and 3 CORESETs among these 6 CORESETs may be configured for monitoring MBS-related control information. In one implementation, the MB S-dedicated CORESET may be MB S-specific. If the status of MBS in the MBS BWP is switched from 'activated' to 'deactivated', the 3 MBS dedicated CORESETs may be released.

For another example, the network may configure 6 CORESETs in the MBS BWP, and 3 CORESETs among these 6 CORESETs may be configured for monitoring MBS-related control information. If the status of MBS in the MBS BWP is switched from 'activated' to 'deactivated', the MBS-interested UE or MBS-capable UE may monitor these 3 MBS dedicated CORESETs to obtain the following information if the UE still needs the broadcast/multicast services:

- Whether the network uses PTP transmission to transmit MBS data to the MBS-interested/MBS-capable UE. In one implementation, if the network configures PTP transmission for MBS, the UE may monitor a DCI format with CRC scrambled by C-RNTI or a specific RNTI that has already been configured by the NW.
- The physical resources (e.g., time/frequency resources, BWP, and so on, but not limited thereto) for receiving the MBS data or transmitting feedback of the previously received MBS data.

**The mapping between MBSs and search spaces**

There may be several types of MBSs, including V2X applications, television broadcasting, group communication, IoT applications, etc. In one implementation, each type of MBS may have a unique MBS ID. In some implementations, control information of different MBSs transmitted in the same BWP may be carried on the same CORESET.

In some implementations, different search spaces may be associated with different MBSs, sessions, or TMGIs. For example, different search spaces associated with the same CORESET may be used to indicate different MBSs (or different sessions, or different TMGIs). If the MBS-interested UE wants to acquire the control information corresponding to the MBS in which it is interested, it may monitor the shared CORESET in the search space assigned to the MBS (or session, or TMGI). In one implementation, the CORESET dedicated for the MBS may be associated with multiple search spaces, and each search space has a search space ID. Each search space ID may be associated with at least one MBS ID.

In some implementations, $M$ MBSs may be mapped to one search space, where $M$ may be a positive integer greater than or equal to 1. The control information of $M$ MBSs may be carried on the same CORESET with the same search space.

In some implementations, $M$=ceiling(the number of MBSs transmitted in the BWP/the maximum number of search spaces). For example, when the number of MBSs transmitted in the BWP is 16 and the maximum number of search spaces is 7, then $M$=ceiling(16/7)=3.

In some implementations, the same CORESET may be shared for different MBSs and unicast transmission. Then $M$=ceiling(the number of MBSs transmitted in the BWP/the maximum number of search spaces used for MBS). For example, when the number of MBSs transmitted in the BWP is 16, the maximum number of search space is 7, and the maximum number of search spaces used for MBS control information signaling is 4, then $M$=ceiling(16/4)=4.

In some implementations, each of the $M$ MBSs may be mapped to a specific search space in an ascending order of MBS ID. For example, if there are 7 MBSs (e.g., MBS #1, MBS #2, ..., MBS #7) and 3 search spaces (e.g., search space #1, search space #2, and search space #3), M will be ceiling(7/3)=3. In this example, MBS #1, MBS #2 and MBS #3 may be mapped to search space #1, MBS #4, MBS #5 and MBS #6 may be mapped to search space #2, and MBS #7 may be mapped to search space #3.

In some implementations, an RNTI related to MBSs may be used to identify a DCI format related to different MBSs in the same CORESET and the same search space.

In some implementations, for a DL BWP for the MBS, the common search space (CSS) set may be used for PDCCH monitoring for broadcast/multicast. For example, the UE may receive an indicator indicating a BWP ID of a DL BWP for receiving MBS data via RRC signaling, and then the UE may use a specific RNTI related to the MBS to monitor the MBS-related PDCCH in the CSS set. The UE may monitor the PDCCH in a CSS associated with the CORESET dedicated for the MBS. In one implementation, the RRC message indicating the CORESET may indicate that the CSS is dedicated for the MBS. In one implementation, the UE may use an RNTI related to the MBS (e.g., M-RNTI) for monitoring the PDCCH in the CORESET. In one implementation, the UE may use a group-common RNTI (e.g., G-RNTI) for monitoring the PDCCH in the CORESET. In one implementation, the UE may use a UE-specific RNTI (e.g., C-RNTI, MCS-C-RNTI) for monitoring the PDCCH in the CORESET.

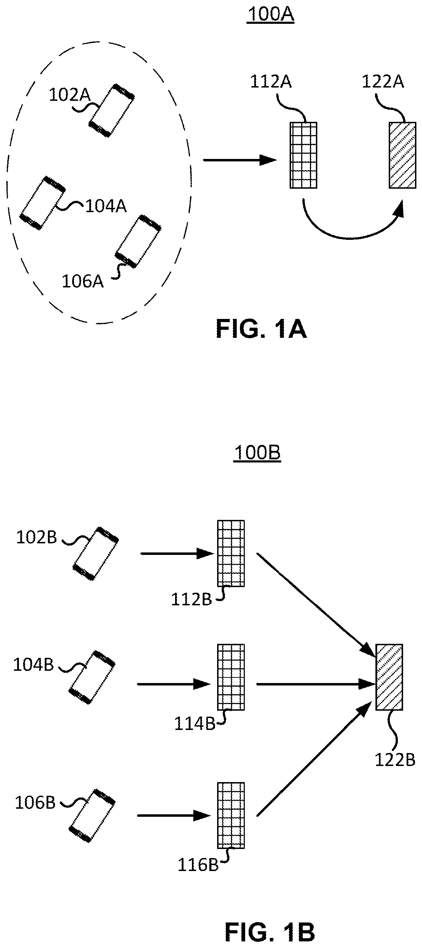

FIG. 1A is a diagram illustrating PDCCH monitoring with a group-common RNTI in an MBS scenario 100A according to an example implementation of the present disclosure. A UE 102A, a UE 104A, and a UE 106A use a group-common RNTI for monitoring a group-common PDCCH 112A, which schedules a group-common PDSCH 122A. The network can transmit DL data via the group-common PDSCH 122A to the UE 102A, UE 104A, and UE 106A, making it a point-to-multipoint (PTM) transmission. All the UE 102A, UE 104A, and UE 106A share the same physical resource (the group-common PDCCH 112A) and use the same RNTI for decoding PDCCH.

FIG. 1B is a diagram illustrating PDCCH monitoring with a UE-specific RNTI in an MBS scenario 100B according to an example implementation of the present disclosure. UE 102B uses a UE-specific RNTI for monitoring a UE-specific PDCCH 112B, UE 104B uses a UE-specific RNTI for monitoring a UE-specific PDCCH 114B, and UE 106B uses a UE-specific RNTI for monitoring a UE-specific PDCCH 116B. Each of the UE-specific PDCCH 112B, the UE-specific PDCCH 114B, and the UE-specific PDCCH 116B schedules a same group-common PDSCH 122B. The network can transmit DL data via the group-common PDSCH 122B to the UE 102B, UE 104B, and UE 106B, making it a PTM transmission.

The MBS scenario 100A illustrated in FIG. 1A consumes fewer resources than the MBS scenario 100B illustrated in FIG. 1B since all the UE 102A, UE 104A, and UE 106A share the same physical resource (the group-common PDCCH 112A). On the other hand, the MBS scenario 100B illustrated in FIG. 1B has a higher reliability than the MBS scenario 100A illustrated in FIG. 1A since each of the UE 102B, UE 104B, and UE 106B uses its unique RNTI for monitoring a UE-specific PDCCH.

In some implementations, a new CSS set defined for MBS (e.g., an MBS-CSS set) may be used for monitoring the MBS DCI format with CRC scrambled by an existing common RNTI (e.g., SI-RNTI, P-RNTI, and so on, but not limited thereto), UE-specific RNTI (e.g., C-RNTI, MCS-C-RNTI, and so on, but not limited thereto), or MBS-related RNTI (e.g., M-RNTI, SC-RNTI, G-RNTI, other new RNTI designed for NR, and so on, but not limited thereto) to acquire the control information of MBS.

In some implementations, the same list of search spaces used for MBS may be configured for the multiple BWPs used for MBSs by the network. In some implementations, each BWP may be associated with a list of search spaces used for MBS, if present.

In some implementations, different lists of search spaces used for MBS may be configured for the multiple BWPs used for MBSs by the network. In some implementations, the relationship between the lists of search spaces configured for MBS and the BWPs configured for MBS may be provided in the MIB or SIBx. In some implementations, the relationship between the lists of search spaces configured for MBS and the BWPs configured for MBS may be pre-defined.

Table 1 shows an example mapping between search space IDs and MBS IDs. Table 1 may be a pre-defined table in one implementation.

**Table 1**

| Search space ID | MB S ID |
|---|---|
| X' | MBS #1 |
| Y' | MBS #2 |
| Z' | MBS #3 |
| P' | MBS #4 |
| Q' | MBS #5 |

Table 2 shows an example mapping between BWP IDs and MBSs. Table 2 may be a pre-defined table in one implementation.

**Table 2**

| BWP ID | MB S ID |
|---|---|
| X" | MBS #1 |
| Y" | MBS #2 |
| Z" | MBS #3 |
| P" | MBS #4 |
| Q" | MBS #5 |

In some implementations, when the UE is operating in its active BWP, it may monitor the control information of the MBS in which it is interested in the MBS BWP, which may not be the same as its active BWP. For example, the UE may monitor the status of its MBS in the MBS BWP, and the MBS BWP may not be its active BWP when it operates in the active BWP. If the status of the MBS is 'activated', the UE may switch to the MBS BWP to read MBS PDSCH. In one implementation, the UE may switch from a current active BWP to the BWP dedicated for the MBS before monitoring the PDCCH in the CORESET dedicated for the MBS.

In some implementations, the UE may be interested in some MBSs operated in its non-active BWP(s). In such case, the UE may only periodically (e.g., 10 milliseconds (ms)) monitor the DCI format with CRC bits scrambled by an MBS-related RNTI (e.g., M-RNTI, G-RNTI), or common RNTI (e.g., P-RNTI, SI-RNTI), or UE-specific RNTI (e.g., C-RNTI) in the non-active BWP to acquire the MBS-related information (e.g., change notification of MBS). The UE may switch to the non-active BWP for MBS once the status of the UE's desired MBS operating in its non-active BWP is 'activated'. Then the status of the original active BWP may be changed to 'deactivated'.

In some implementations, when the UE switches to another BWP to receive its desired MBS data without higher layer signaling, the UE may explicitly inform the gNB that the UE switches to another BWP. For example, in an explicit way, the UE may send a BWP ID or an index of a BWP ID provided in its BWP ID list to the gNB in the pre-configured PUCCH/PUSCH resources. For another example, in an explicit way, the network (e.g., gNB) may broadcast an MBS counting request message for a UE interested in a certain MBS, and then the UE may transmit an MBS counting response message carrying UE information. Therefore, the gNB may know which BWP the UE switches to.

In one implementation, when a UE switches to another desired BWP, the UE may initiate a random access (RA) process and send a notification message to the cell on the desired BWP. The notification message may be a dedicated preamble, a new MAC CE, or a new RRC message. In one implementation, a UE may send a switching request to the cell on the current active BWP. Afterward, the cell may transmit a BWP switching command to the UE (either via DCI or RRC). After receiving the BWP switching command, the UE may perform the BWP switching according to the Rel-15 specifications. The switching request may be an RRC message, a physical layer signaling, or a Message-A (MSGA) of a two-step RA procedure.

In some implementations, when a UE switches to another BWP to receive its desired MBS data without higher layer signaling, the UE may implicitly inform the gNB that the UE switches to another BWP. For example, the network (e.g., gNB) may configure two BWPs for MBS operation. If the MBS-interested UE does not respond (e.g., transmitting ACK/NACK for MBS data reception) in its original operating BWP, the network may know that the UE switches to another BWP. For another example, the UE may request two BWPs for its desired MBS. Only one BWP is active, and the other BWP may be only monitored by the UE. If the MB S-interested UE does not respond (e.g., transmitting ACK/NACK for MBS data reception) in its original operating BWP, the network may know that the UE switches to the other BWP.

## MBS dedicated resources (resources only used for MBS operation)

In some implementations, if a UE is configured by higher layers (e.g., the RRC layer) to operate in a dedicated serving cell/BWP for the MBS (e.g., the serving cell/BWP only allows MBS transmission), or if a UE is configured by higher layers to operate in an MBS/unicast-mixed serving cell (e.g., the serving cell/BWP allows coexistence of MBS transmission and non-MBS unicast transmission), the NW may allocate physical resources (e.g., time/frequency resources) for the MBS. Information of the physical resources used for the MBS may be transmitted to the UE via MIB, SIBx (e.g., SIB1, SIB9, MBS-dedicated SIB, and so on, but not limited thereto), DCI, or an RRC message. The physical resources for the MBS may be common physical resources, which may be shared by multiple UEs for the MBS transmission. In one implementation, the common physical resources may be a BWP for the MBS (e.g., the MBS BWP). The common physical resources in the present disclosure may include common frequency resource(s), common time resource(s), and common BWP(s).

In some implementations, the UE may read system information that carries information of the MBS BWP. In an MBS non-active BWP, the UE may receive an indicator via SIBx (e.g., the status of the current MBS BWP is switched from 'deactivated' to 'activated') or DCI (e.g., a preemption indicator) informing the UE that the MBS is ready to start. Then the UE may interrupt/stop/suspend the current non-MBS PDSCH reception and/or cancel the UL transmission on the resources related to the MBS even though the gNB has allocated the resources for the UE to transmit UL data via a configured grant or a dynamic grant.

In some implementations, if the MBS data is scheduled to be transmitted to MBS-interested UEs, the network may provide a preemption indicator (e.g., *DownlinkPreemption*) for the UEs operating in the current cell/BWP.

In some implementations, if *DownlinkPreemption* is provided via the DCI formats with CRC scrambled by RNTIs defined to inform a UE in the MBS BWP that the MBS transmission is ready to start (e.g., the RNTI may be associated with P-RNTI and/or MBS BWP ID), the non-MBS-interested/non-MBS-capable UE may stop/cancel all scheduled UL transmission/DL reception. The UE may switch to the BWP configured in the system information or carried in the DCI.

In some implementations, the non-MBS-interested UE may know whether its operating BWP is used for MBS or not via system information or DCI. If the non-MBS-interested UE operates in the MBS BWP, the *DownlinkPreemption* indication provided in the DCI may implicitly inform the non-MBS-interested UE that the resources in which UL/DL transmission is already allocated are canceled.

In some implementations, if *DownlinkPreemption* is provided via the DCI formats with CRC scrambled by RNTIs defined to inform a UE that the MBS transmission is ready to start, the UE (e.g., a UE interested in a certain MBS or an MBS-capable UE) may stop/cancel all UL transmission/DL reception except for MBS data reception, feedback for the MBS, or the allowed type(s) of UL/DL transmissions in the physical resources allocated for the MBS. The allowed type(s) of UL/DL transmissions may be configured or pre-defined.

In some implementations, if the network is ready to broadcast/multicast the MBS data, the network may change the MBS status to 'activated'.

In some implementations, if the MBS status is switched from 'deactivated' to 'activated' and the 'preemption indicator' carried in the DCI is received by the UE, the UE in the MBS cell/BWP may stop/suspend/interrupt all UL transmission/DL reception.

In some implementations, if the MBS status is switched from 'deactivated' to 'activated' and a UE in the current BWP receives the 'pre-emption indicator' carried in the DCI, the UE (which may be an MBS-interested UE, an MBS-capable UE, a non-MBS-interested UE, or a non-MBS-capable UE) may stop/suspend/interrupt the data reception/transmission in the current BWP. The non-MBS-interested/non-MBS-capable UE may switch to a specific BWP configured in the system or carried in the DCI, whereas the MB S-interested/MBS-capable UE may still operate in the current BWP.

In some implementations, if the network is ready to stop broadcasting/multicasting the MBS data, the network may change the MBS status to 'deactivated'.

In some implementations, if the MBS status is switched from 'activated' to 'deactivated', the MBS-interested UE may monitor the DCI format with CRC scrambled by C-RNTI, MCS-C-RNTI, or other MBS-related RNTIs in the UE-specific search space to continue to receive MBS PDSCH.

In some implementations, when the status of the MBS is switched from 'activated' to 'deactivated' and the MBS-interested UE receives the 'preemption indicator' carried in the DCI, the UE may interrupt/stop/suspend the current MBS data reception/transmission. The UE may directly switch to a predefined BWP (e.g., the first BWP that the network configures for the MBS-interested UE to switch to) to monitor the DCI format with CRC scrambled with the MBS-related RNTI (e.g., M-RNTI, G-RNTI, or other RNTIs used for MBS) in the CSS or UE-specific search space to continue to receive MBS PDSCH.

**MBS-unicast shared resources (resources used for both MBS operation and non-MBS operation)**

In some implementations, a UE may be configured by higher layers (e.g., the RRC layer) to operate in a serving cell/BWP for the MBS (e.g., the serving cell/BWP only allows MBS transmission), or a UE may be configured by higher layers to operate in an MBS/unicast-mixed serving cell (e.g., the serving cell/BWP allows coexistence of MBS transmission and non-MBS unicast transmission). In some implementations, the NW may allocate physical resources (e.g., time/frequency resources) for the MBS. Information of physical resources used for the MBS may be transmitted to the UE via MIB, SIBx (e.g., SIB1, SIB9, MBS dedicated SIB, and so on, but not limited thereto) or DCI.

In some implementations, the UE may obtain status information of the MBS from system information. In a BWP in which the MBS is not active, the UE may receive an indicator via SIBx (e.g., the status of the current MBS BWP is switched from 'deactivated' to 'activated') or DCI (e.g., a preemption indicator) informing the UE that the MBS is ready to start. Then the UE may interrupt/stop/suspend the current non-MBS PDSCH reception.

In some implementations, some time/frequency resources may be reserved for the MBS operation in a BWP. If the status of MBS is switched to 'activated', the non-MBS-interested UE operating in the reserved resources for the MBS may receive a 'preemption indicator' carried in the DCI. Then the UE may stop/interrupt/suspend the data reception/transmission.

In some implementations, the time/frequency resources may be reserved for the MBS operation in a BWP. The reserved physical resources may also be used for non-MBS transmission if the MBS in the physical resources is not active. If the MBS in the physical resources is switched from 'deactivated' to 'activated', the network may update the change notification of the MBS and send a 'preemption indicator' to the non-MBS-interested/non-MBS-capable UE that operates in the physical resources.

**DCI format for MBS**

In some implementations, when a UE requests MBS or the network sends the MBS change notification to the MBS-interested UE, the network may configure/provide a list of search spaces used for the MBS to the UE requesting MBSs for monitoring PDCCHs in the active BWP/initial BWP/MBS-dedicated BWP. If the network configures the list, the network may use *SearchSpaceIds* other than 0. If the list is included in the *PDCCH-Config, PDCCH-ConfigCommon,* or a new IE used for MBS PDCCH configuration (e.g., *PDCCH-ConfigMBS*), the list may replace any previous list. For example, all the entries of the list may be replaced, each of the *SearchSpace* entries may be considered as newly created, and the conditions and Need codes for setup of the entry may apply. In addition, the mapping between each *SearchSpaceId* and each MBS may be provided in the *PDCCH-Config, PDCCH-ConfigCommon,* or the new IE used for MBS PDCCH configuration (e.g., *PDCCH-ConfigMBS).*

In some implementations, the new IE (e.g., *PDCCH-ConfigMBS*) may be used to carry at least one of the following MBS-related RRC parameters:

- Change notification of MBS: it may be the status of MBS (e.g., 'activated' or 'deactivated')
- MBS-SearchSpace: ID of the search space for MBS
- MBS repetition number: the number of times of repetition of the MBS data
- PTP or PTM MBS mode: If PTP mode, the UE may use its C-RTNI for descrambling (e.g., descrambling PDSCH). Otherwise, the UE may use MBS-related RNTI for descrambling (e.g., descrambling PDSCH)

In some implementations, the following information related to MBS may be transmitted by (1) a DCI formatX with CRC scrambled by an existing common RNTI (e.g., SI-RNTI, RA-RNTI, P-RNTI, and so on, but not limited thereto) or an existing UE-specific RNTI (e.g., C-RNTI, MCS-C-RNTI, and so on, but not limited thereto) in a new CSS used for monitoring MBS-related PDCCH; (2) a DCI formatX with CRC scrambled by an MBS-related RNTI (e.g., M-RNTI, G-RNTI, other new RNTIs used for MBS, and so on, but not limited thereto) in the CSS or UE-specific search space for monitoring MBS-related PDCCH; or (3) a DCI formatX with CRC scrambled by MBS-related RNTI (e.g., M-RNTI, G-RNTI, other new RNTIs used for MBS, and so on, but not limited thereto) in a new CSS used for monitoring MBS-related PDCCH. The DCI formatX may be a new DCI format or an existing DCI format, such as DCI format 0_0, DCI format 1_0, DCI format 2_0, etc. The DCI formatX may include at least one of the following fields:

- Identifier for DCI formats
- Frequency domain resource assignment
- Time domain resource assignment
- VRB-to-PRB mapping
- Modulation and coding scheme
- New data indicator

- Redundancy version
- HARQ process number
- Downlink assignment index
- BWP-related information

In some implementations, the field (BWP-related information) may provide a mapping between BWPs and different MBSs. For example, the UE may switch to a specific BWP associated with the MBS in which it is interested according to the field. In some implementations, the field may provide BWP information for the UE to receive the next MBS.

- MBS BWP ID: The field may be used to indicate the MBS BWP for a UE to receive the MBS-related data and/or transmitting the feedback, e.g., ACK/NACK, channel condition, and so on, but not limited thereto.

In some implementations, the field (MBS BWP ID) may carry a single value. Only one BWP may be configured for the MBS, and the MBS-related transmission may take place in the indicated BWP.

In some implementations, the field (MBS BWP ID) may be absent. If the field is absent, the UE may assume that the MBS-related transmission takes place in the current active BWP.

In some implementations, the field (MBS BWP ID) may carry multiple values. Several BWPs may be configured for the MBS. For example, the NW may indicate that MBS #1 (or its related session, or its related TMGI) is provided in BWP #1 and MBS #2 (or its related session, or its related TMGI) is provided in BWP #2. In some implementations, a BWP configuration associated with a specific MBS (or its related session, or its related TMGI) may be provided via broadcasting system information or dedicated signaling.

In some implementations, an MBS-capable UE may be configured with more than 4 BWP configurations. For example, the MBS-capable UE may be allowed to be configured with K BWP configurations and K may be greater than or equal to 4. BWP configurations with BWP ID 0, 1, 2, and 3 may be used for normal BWP operations. Only BWP with BWP ID 0, 1, 2, or 3 may be an active BWP for an MBS-capable UE. The UE may be allowed to receive MBS(s) on another BWP (e.g., a BWP with a BWP ID larger than 3). The number of BWPs (except the current active BWP) the MBS-capable UE is allowed to monitor/receive MBS data may be based on UE capability or NW instruction(s).

- MBS change notification: accoding to the invention, the change notification of MBSs when an MBS-related control channel is modified due to Session Start or the presence of an MBS counting request message. The field may be present in DCI format 1_0/1_1 when the CRC of the DCI format 1_0/1_1 is scrambled by an MBS-related RNTI, e.g., MBMS-RNTI, M-RNTI, Group-RNTI, but not limited thereto.
- MBS status: The field may be used to indicate the current status of an MBS (or its related session, or its related TMGI). For example, the MBS status may indicate whether the (MBS) sessions are started or not, whether the sessions are ready to close or not, which session is broadcasting/multicasting, and so on, but not limited thereto.
- MBS repetition period: The field may be used to indicate the repetition period of the MBS. In some implementations, an MBS repetition period may be associated with a specific MBS (or its related session, or its related TMGI). In some implementations, an MBS repetition period may be associated with an MBS BWP or included in an MBS BWP configuration.
- Frequency bitmap: The field may be used to indicate the starting position of the frequency of each MBS. For example, the starting frequency position of MBS #1 is k1, the starting frequency position of MBS #2 is k2, and so on, where k1 may be 900MHz and k2 may be 910MHz. In some implementations, the field may be used to indicate the frequency gaps between each MBS and the frequency reference point. For example, the NW may set MBS #1 to be a reference point, the gap between MBS #2 and MBS #1 is k1, the gap between MBS #3 and MBS #1 is k2, and so on, where the unit of k1 and k2 may be RB, kHz, and so on, but not limited thereto. In some implementations, the field may be used to indicate the frequency gap between a specific MBS starting frequency and a common reference point. The common reference point may be used by multiple MBSs to derive their individual starting frequency positions. The resolution of the field may be pre-defined/pre-configured/configured. In one example, the resolution depends on the subcarrier spacing of SSB associated with the MBS BWP. In some implementations, the field may be used to indicate a common gap between each MBS, where the unit of the gap may be RB, kHz, and so on, but not limited thereto. In some implementations, the starting frequency position of the first MBS may be pre-defined or provided in a SIBx. In some implementations, a frequency bitmap may be associated with a specific MBS (or its related session, or its related TMGI). In some implementations, a frequency bitmap may be associated with an MBS BWP or included in an MBS BWP configuration.
- MBS Timing bitmap: The field may be used to indicate the starting timing position of each MBS in each slot or SFN. For example, the starting timing position of the first MBS transmitted after SIBx/PDCCH used for providing configurations of MBS is t1, the starting timing position of the second MBS transmitted after SIBx/PDCCH used for providing the configurations of MBS is t2, and so on.

In some implementations, t1 (e.g., the index of OFDM symbol in a time slot) may be the beginning symbol in the first time slot after SIBx/PDCCH used for providing the configurations of MBS, and t2 (e.g., the index of OFDM symbol in a time slot) may be the beginning symbol in the second time slot after SIBx/PDCCH used for providing the configurations of MBS. In some implementations, the relationship between each timing (e.g., t1, t2) and MBS ID may be provided. For example, the t1 may be defined as the starting timing position for MBS #1, the t2 may be defined as the starting timing position for MBS #2, and so on, but no limited thereto. In some implementations, the MBS repetition may be activated by the network, and then the relationship between each timing (e.g., t1, t2) and MBS ID may be associated with the repetition number. For example, if the network configures the repetition number as 3, timing t1, t2, t3 may be defined as the starting timing position for each MBS #1 transmission, timing t4, t5, t6 may be defined as the starting timing position for each MBS #2 transmission, and so on, but not limited thereto.

In some implementations, the field (MBS Timing bitmap) may be used to indicate the timing gaps between each MBS and timing reference point. For example, the first time and frequency resource configured for MBS operation after receiving the SIBx/PDCCH used for providing configurations of MBS may be predefined as a reference point. The gap between the next MBS and the first MBS is t1, the gap between the third MBS and the first MBS is t2, and so on, where the unit of t1/t2 may be a slot, subframe, OFDM symbol, and so on, but not limited thereto. In some implementations, the field may be used to indicate a common timing gap between each MBS, where the unit of the common timing gap may be a slot, subframe, OFDM symbol, and so on, but not limited thereto. In some implementations, the starting timing position of the first configured MBS after SIBx/PDCCH used for providing configurations of MBS may be pre-defined (e.g., the first time slot after the SIBx/PDCCH used for providing the configurations of MBS) or provided in the SIBx. In some implementations, a timing bitmap may be associated with a specific MBS (or its related session, or its related TMGI). In some implementations, a timing bitmap may be associated with an MBS BWP or included in an MBS BWP configuration.

In some implementations, the ordering of the MBSs within an MBS BWP may follow the rules: first, in increasing order of frequency resource indexes for frequency-multiplexed MBSs; second, in increasing order of time resource indexes for time-multiplexed MBSs

- Reference point: The field may be used to indicate the reference time/frequency point of MBS. For example, the field may inform the UE that the reference timing reference point is the beginning of the first slot after the SIBx/PDCCH used for providing the configurations of MBS. In some implementations, a reference point may be associated with a specific MBS (or its related session, or its related TMGI). In some implementations, a reference point may be associated with an MBS BWP or included in an MBS BWP configuration.
- PUCCH resources: The field may be used to provide the PUCCH resources for each MBS-interested UE to report some information after receiving the MBS data, such as ACK/NACK, channel state information, and so on, but not limited thereto. For example, the field may provide the common timing/frequency gap, e.g., 0 RB and 1 subframe, between PUCCH resource and each MBS. In some implementations, the frequency gap may be 0, and the field may only provide the timing gap. In some implementations, a set of PUCCH resources (or the corresponding PUCCH configuration) may be associated with a specific MBS (or its related session, or its related TMGI). In some implementations, a set of PUCCH resources (or the corresponding PUCCH configuration) may be associated with an MBS BWP or included in an MBS BWP configuration.
- Some PUCCH-related information, e.g., TPC command for scheduled PUCCH, PUCCH resource indicator, PDSCH-to-HARQ_feedback timing indicator, the number of PUCCH resources, timing offset between each PUCCH resource, frequency offset between each PUCCH resource.
- MBS BWP activate/deactivate: The field may be used to inform the UE that the current MBS BWP is already used for MBS transmission, and the UE may not receive or transmit any signal except MBS signal.

**Issue #2: Pseudo random sequence initialization**

The pseudo random sequences are generally used for data channel (e.g., PDSCH, PUSCH) scrambling or DMRS sequence generation. For these pseudo random sequences, initialization is necessary and needs several parameters, such as RNTI, cell identity (ID), and so on. However, such parameters may not be used for NR MBS operation. The initialization of a pseudo random sequence for the NR MBS operation is disclosed in the present disclosure.

In some implementations, the UE may assume that the PDCCH DMRS sequence $r_l(n)$ is defined by

$$r(m) = \frac{1}{\sqrt{2}}\big(1 - 2 \cdot c(2m)\big) + j\frac{1}{\sqrt{2}}\big(1 - 2 \cdot c(2m + 1)\big)$$

where the pseudo-random sequence c(i) generator may be initialized with

$$c_{\mathrm{init}} = \left(2^{17}\left(N_{\mathrm{symb}}^{\mathrm{slot}} n_{s,f}^{\mu} + l + 1\right)(2N_{ID} + 1) + 2N_{ID}\right)\mathrm{mod}2^{31}$$

where $l$ is the OFDM symbol number within the slot, $n_{s,f}^{\mu}$ is the slot number within a frame, and

$N_{ID} \in \{0,1, ...,65535\}$ are given by the higher-layer parameters pdcch-DMRS-ScramblingID if provided in the *ControlResourceSet* IE or other IEs used for MBS if provided

In some implementations, the UE may assume the PDSCH DMRS sequence $r(n)$ is defined by

$$r(n) = \frac{1}{\sqrt{2}}\left(1 - 2 \cdot c(2n)\right) + j\frac{1}{\sqrt{2}}\left(1 - 2 \cdot c(2n + 1)\right)$$

where the pseudo-random sequence c(i) generator may be initialized with

$$c_{\mathrm{init}} = \left(2^{17}\left(N_{\mathrm{symb}}^{\mathrm{slot}} n_{s,f}^{\mu} + l + 1\right)\left(2N_{ID}^{n_{\mathrm{SCID}}} + 1\right) + 2N_{ID}^{n_{\mathrm{SCID}}} + n_{\mathrm{SCID}}\right)\mathrm{mod}2^{31}$$

where $l$ is the OFDM symbol number within the slot, $n_{s,f}^{\mu}$ is the slot number within a frame, and

$N_{ID}^{0},\ N_{ID}^{1} \in \{0,1, ...,65535\}$ are given by the higher-layer parameters scramblingID0 and scramblingID1, respectively, in the *DMRS-DownlinkConfig* IE or other IEs used for MBS if provided, and the PDSCH is scheduled by PDCCH using DCI format with the CRC scrambled by C-RNTI, MCS-C-RNTI, CS-RNTI, SI-RNTI, or MBS-related RNTIs (e.g., G-RNTI, M-RNTI, or other RNTIs used for MBS).

$N_{ID}^{0} \in \{0,1, ...,65535\}$ are given by the higher-layer parameters scramblingID0 and scramblingID1, respectively, in the *DMRS-DownlinkConfig* IE or other IEs used for MBS if provided, and the PDSCH is scheduled by PDCCH using DCI format with the CRC scrambled by C-RNTI, MCS-C-RNTI, CS-RNTI, G-RNTI, M-RNTI, SI-RNTI or other RNTIs used for MBS.

In some implementations, $N_{ID}^{n_{\mathrm{SCID}}}$ may be associated with MBS$_{\mathrm{ID}}$, $n_{\mathrm{RNTI}}$, $N_{ID}^{\mathrm{cell}}$, or other values related to MBS$_{\mathrm{ID}}$, but not limited thereto.

Where MBS$_{\mathrm{ID}}$ is the MBS ID that may be configured by the network, defined by the higher layer, or predefined, $n_{\mathrm{RNTI}}$ corresponds to the RNTI associated with the MBS transmission, and $N_{ID}^{\mathrm{cell}}$ is the cell index.

In some implementations, the UE may obtain MBS$_{\mathrm{ID}}$ in the pre-defined table, and the UE may decode the MBS PDSCH in which the UE is interested according to its MBS ID. In some implementations, the UE may send its MBS to the network, and then the network may provide the MBS$_{\mathrm{ID}}$ corresponding to its MBS to the UE. In some implementations, the network may provide the MBS$_{\mathrm{ID}}$ of each MBS to the MBS-interested UEs via MIB, SIBx, or the DCI format.

In some implementations, $n_{\mathrm{RNT1}}$ may be C-RNTI, G-RNTI, M-RNTI, SI-RNTI or other RNTIs used for MBS.

In some implementations, the initialization of the pseudo random sequence for the DMRS sequences may be associated with at least one of the following items:

- Common RNTI, e.g., RA-RNTI, SI-RNTI, P-RNTI, and so on, but not limited thereto.
- Timing position of MBS transmission, e.g., the index of the first symbol of MBS transmission, the index of a slot of MBS transmission in a subframe.
- Frequency position of MBS transmission, e.g., the index of different MBSs in the frequency domain.
- MBS ID, e.g., the identity of different MBSs configured by the network.
- MBS session ID
- BWP ID
- TMGI

In some implementations, the scrambling sequence generator for PDSCH used for MBS may be initialized with

$$c_{\mathrm{init}} = n_{\mathrm{RNTI}} \cdot 2^{15} + q \cdot 2^{14} + n_{\mathrm{ID}}$$

or

$$c_{\text{init}} = (\text{MBS}_{\text{ID}} + n_{\text{RNTI}}) \cdot 2^{15} + q \cdot 2^{14} + n_{\text{ID}}$$

In some implementations, $n_{\text{ID}} \in \{0,1, \ldots ,1023\}$ equals the higher-layer parameter *dataScramblingIdentityPDSCH* or other parameter used for MBS (e.g., *dataScramblingIdentityMBS*) if configured. The RNTI may be the C-RNTI, MCS-C-RNTI, CS-RNTI, Group-RNTI, or other RNTIs related to the MBS, and the transmission may be scheduled using DCI format 1_0 in a common search space.

The RNTIs related to the MBS may be related to the MBS interest, the group index of the group that the gNB schedules to use the same PDSCH for the MBS, or a combination of the MBS interest and the group index of the group that the gNB schedules to use the same PDSCH for broadcast/multicast services, but not limited thereto.

In some implementations, the initialization of the scrambling sequence generator for MBS PDSCH may be associated with at least one of the following items:

- Common RNTI, e.g., RA-RATI, SI-RNTI, P-RNTI, and so on, but not limited thereto.
- Timing position of MBS transmission, e.g., the index of the first symbol of MBS transmission, the index of a slot of MBS transmission in a subframe.
- Frequency position of MBS transmission, e.g., the index of different MBSs in the frequency domain.
- MBS ID, e.g., the identity of different MBSs configured by the network.
- MBS session ID
- BWP ID
- TMGI

In some implementations, the UE may obtain $\text{MBS}_{\text{ID}}$ in the pre-defined table, and the UE may decode the MBS PDSCH in which the UE is interested according to its MBS ID (or other related ID). In some implementations, the UE may send its MBS to the network, and then the network may provide the $\text{MBS}_{\text{ID}}$ corresponding to its MBS to the UE. In some implementations, the network may provide the $\text{MBS}_{\text{ID}}$ of each MBS to the MBS-interested UEs via MIB, SIBx, or carrying in the DCI format.

## Issue #3: System information signaling

Since there are no broadcast/multicast services support specified in the Release-15 and Release-16 NR, it may be required to consider how to reuse the Release-15 and Release-16 control mechanisms for the MBS, consider the new characteristics introduced in NR, and/or consider how to design a new control mechanism for the MBS. In issue #3, implementations of the control mechanism focusing on system information signaling are disclosed. The disclosed implementations address which fields should be included in the system information to support MBS, how to signal the MBS-related information via the system information to the MBS-interested UEs, and so on.

## MBS related system information acquisition by the UE

In some implementations, the UE may acquire a dedicated SIBx used for the MBS (e.g., via reading the scheduling information included in the SIB1). In some implementations, a modification period may be used. Updated SI (other than ETWS, CMAS, and MBS) may be broadcast in the modification period following a period in which an SI change indication is transmitted. In some implementations, a UE (e.g., a UE interested in a certain MBS or an MBS-capable UE) may receive an indication about an MBS-related SIB(s) change/modification. In some implementations, the UEs (e.g., a UE interested in a certain MBS or an MB S-capable UE) in the RRC_IDLE or RRC_INACTIVE state may monitor for an MBS-related change/modification indication in its own paging occasion (e.g., PDCCH monitoring occasions for paging). In every DRX cycle, the own paging occasion may be associated with at least one of a UE ID, the UE's session ID, MBS ID, and TMGI.

In one implementation, an MBS-specific paging occasion and DRX cycle may be used. A UE interested in a certain MBS or an MB S-capable UE may additionally monitor the paging occasion. The DCI applied for the MBS-specific paging occasion may be scrambled by P-RNTI or a new RNTI. A UE (e.g., a UE interested in a certain MBS or an MBS-capable UE) in the RRC_CONNECTED state may monitor for an MBS-related change/modification indication in any paging occasion at least once per modification period or at least once every paging cycle (e.g., DRX cycle), which may be used for RRC_CONNECTED/RRC_INACTIVE/RRC_IDLE UEs if the UE is provided with a common search space on the active BWP to monitor paging.

In some implementations, there may be a bit for an MBS-related change/modification indication in a short message. The UE may monitor the PDCCH monitoring occasion(s) for paging for short message reception. In some implementations, if the bit for an MBS-related change/modification indication in the short message is set, the UE (e.g., a UE interested in a certain MBS or an MBS-capable UE) may apply an SI acquisition procedure (e.g., to update MBS-related SIB(s) or SIBx). In some implementations, if the bit for an MB S-related change/modification indication in a short message is "1", the UE may apply the SI acquisition procedure (e.g., to update MBS-related SIB(s) or SIBx). In some implementations, if the bit for an MBS-related change/modification indication in a short message is "0" or absent, the UE may apply the SI acquisition procedure (e.g., to update MBS-related SIB(s) or SIBx). In some implementations, if the bit for an MBS-related change/modification indication in a short message is "1", the UE may not apply SI acquisition procedure (e.g., to update MBS-related SIB(s) or SIBx). In some implementations, if the bit for an MBS-related change/modification indication in a short message is "0" or absent, the UE may not apply the SI acquisition procedure (e.g., to update MBS-related SIB(s) or SIBx). In some implementations, the UE may ignore the bit for an MBS-related change/modification indication when the UE receives the short message. In some implementations, the short message may be transmitted by the BS (or serving/camped cell) on PDCCH using P-RNTI or a new RNTI (e.g., MBS-related RNTI) with or without an associated paging message. The short message may be transmitted by the BS (or serving/camped cell) using a short message field in the DCI format 1_0 scrambled by P-RNTI, or using a short message field in the DCI format 1_0 scrambled by the new RNTI.

In some implementations, the MBS-related information (e.g., BWP ID, time/frequency resource allocation, MBS change notification, and so on, but not limited thereto) may be carried in the system information. In one implementation, the MBS-related information may be only acquired by the MBS-interested UE. In one implementation, the MBS-related information may be acquired by both the MBS-interested UEs and non-interested UEs. For example, the following information may be included in the system information (e.g., MBS-dedicated SIBx, other existing SIBs (e.g., SIB1, SIB2), and so on, but not limited thereto):

- MBS BWP ID: The information may be included in the system information to indicate the BWPs that may be used for MBS to the UE to receive the MBS-related data and/or transmit the feedback, such as ACK/NACK, channel condition, and so on, but not limited thereto. The information may be explicitly indicated (e.g., an indication to inform the UE which BWP(s) is used for the MBS) or implicitly indicated (e.g., a BWP configured with an MBS-related search space or MBS-related CORESET(s)) to the UE by the network.

In some implementations, the network may configure the first BWP to which the MBS-interested/MBS-capable UE switches when the UE finishes the MBS transmission. In some implementations, the network may configure the first BWP to which the MB S-interested/MB S-capable UE switches when the network configures the MBS(s) in the UE's operating BWP as 'deactivated'.

In some implementations, the UE may receive different MBS BWP ID(s) indicated from SIBx and DCI. In such case, the UE may replace the MBS BWP ID(s) indicated from SIBx with the MBS BWP ID(s) indicated from DCI. For example, the NW may configure the MBS BWP IDs as {1, 3, 4, 5} in the system information for MBS operation. After the UE acquires the MBS BWP IDs in the system information, the UE may obtain another set of MBS BWP IDs carried in the DCI. The MBS BWP IDs carried in the DCI are {2, 3, 5, 6}. Then the UE may replace the MBS BWP IDs already carried in the system information with the MBS BWP IDs carried in the DCI. Therefore, the MBS BWP IDs will be {2, 3, 5, 6}.

In some implementations, the UE may receive the MBS BWP IDs and BWP IDs used for transmission other than MBS. In such case, the UE may release the BWP ID(s) that are the same as the MBS BWP ID(s). For example, the network may configure the BWP IDs as {2, 4, 5, 6} (used for non-MBS transmission). The network may configure the MBS BWP IDs as {1, 4, 5, 8}. Then the BWP #4 and BWP #5 used for non-MBS transmission may be released by the UE. Therefore, the BWP ID(s) may be {2, 6} (for non-MBS transmission), and the MBS BWP IDs may remain as {1, 4, 5, 8}.

In some implementations, the MBS transmission may coexist with a non-MBS transmission. In such case, the NW may additionally configure which BWPs among the configured BWPs are the BWPs in which an MBS operation takes place. For example, the network may configure the BWP IDs as {2, 4, 5, 6}, and the network may configure/indicate that the BWP IDs {4, 5} are used to perform the MBS operation via the system information or the DCI. For another example, the network may configure the BWP IDs as {2, 4, 5, 6}, and the network may configure/indicate which position in the BWP IDs (e.g., '1' means the first value in the list of BWP IDs, '2' means the second value in the list of BWP IDs, and so on, but not limited thereto) may be used to perform the MBS operation. In some implementations, the MBS-interested UE/MBS-capable UE may monitor the DCI format(s) with CRC bits scrambled by an existing RNTI (e.g., P-RNTI, SI-RNTI, and so on, but not limited thereto) or MBS-related RNTI for obtaining the MBS control information.

In some implementations, the UE may receive MBS BWP ID(s) from the SIBx and another set of BWP ID(s) used for other purposes different than MBS from the DCI. In such a case, the non-MBS-interested UE may not operate on the MBS BWP in which the status of MBS is 'activated'.

In some implementations, the NW may indicate which BWP ID is used for MBS from the *bwp-Id* in the *BWP-Downlink* field. If there is only one BWP, then no BWP may be configured as the MBS BWP. In addition, the NW may configure which BWP is the first BWP to which the UE switches when the UE finishes MBS.

In some implementations, the field (MBS BWP ID) may carry a single value. Only one BWP may be configured for the MBS, and the MBS-related transmission may take place in the indicated BWP.

In some implementations, the field (MBS BWP ID) may carry multiple values. Several BWPs may be configured for the MBS. For example, the NW may indicate that MBS #1 (or its related session, or its related TMGI) is provided in BWP #1 and MBS #2 (or its related session, or its related TMGI) is provided in BWP #2. In some implementations, a BWP configuration associated with a specific MBS (or its related session, or its related TMGI) may be provided via broadcasting system information or dedicated signaling.

In some implementations, an MBS-capable UE may be configured with more than 4 BWP configurations. For example, the MBS-capable UE may be allowed to be configured with K BWP configurations and K may be greater than or equal to 4. BWP configurations with BWP ID 0, 1, 2, and 3 may be used for normal BWP operations. Only BWP with BWP ID 0, 1, 2, or 3 may be an active BWP for an MBS-capable UE. The UE may be allowed to receive MBS(s) on another BWP (e.g., a BWP with a BWP ID larger than 3). The number of BWPs (except the current active BWP) the MBS-capable UE is allowed to monitor/receive MBS data may be based on UE capability or NW instruction(s).

In some implementations, a PRB index set may be used for indicating the MBS dedicated transmitting region. The PRB index set may overlap a configured BWP and/or span across multiple different configured BWPs.

- Modulation and coding scheme: The field may be used to indicate the modulation scheme and code rate. For example, there are 4 combinations of modulation and code rate used for the MBS, including {QPSK, code rate=1/3}, {QPSK, code rate=1/2}, {16QAM, code rate=1/3}, and {16QAM, code rate=1/2}. 2 bits may be used to represent each combination in the field. For example, "00" represents {QPSK, code rate=1/3}, "01" represents {QPSK, code rate=1/2}, "10" represents {16QAM, code rate=1/3}, and "11" represents {16QAM, code rate=1/2}. In some implementations, a modulation and coding scheme may be associated with a specific MBS (or its related session, or its related TMGI). In some implementations, a modulation and coding scheme may be associated with an MBS BWP or included in an MBS BWP configuration.

- MBS status: The field may be used to indicate the current status of an MBS (or its related session, or its related TMGI). For example, the MBS status may indicate whether the (MBS) sessions have been started or not, whether the sessions are ready to close or not, which session is broadcasting/multicasting, and so on, but not limited thereto. A bitmap may be used for indicating the respective MBS session status within the cell. In one implementation, the cell may further indicate the MBS status in its neighboring cells. A zone concept may be applied, and a bitmap may be used for indicating the MBS status corresponding to the zone region.

- MBS repetition period: The field may be used to indicate the repetition period of the MBS. In some implementations, to achieve the reliability requirement for different MBSs, the field may provide several period values corresponding to different MBSs. In some implementations, an MBS repetition period may be associated with a specific MBS (or its related session, or its related TMGI). In some implementations, an MBS repetition period may be associated with an MBS BWP or included in an MBS BWP configuration.

- Frequency bitmap: The field may be used to indicate the starting position of the frequency of each MBS. For example, the starting frequency position of MBS #1 is k1, the starting frequency position of MBS #2 is k2, and so on, where k1 may be 900MHz and k2 may be 910MHz. In some implementations, the field may be used to indicate the frequency gaps between each MBS and the frequency reference point. For example, the NW may set MBS #1 to be a reference point, the gap between MBS #2 and MBS #1 is k1, the gap between MBS #3 and MBS #1 is k2, and so on, where the unit of k1 and k2 may be RB, kHz, and so on, but not limited thereto. In some implementations, the field may be used to indicate the frequency gap between a specific MBS starting frequency and a common reference point. The common reference point may be used by multiple MBSs to derive their individual starting frequency positions. The resolution of the field may be pre-defined/pre-configured/configured. In one example, the resolution depends on the subcarrier spacing of an SSB associated with the MBS BWP. In some implementations, the field may be used to indicate a common gap between each MBS, where the unit of the gap may be RB, kHz, and so on, but not limited thereto. In some implementations, the starting frequency position of the first MBS may be pre-defined or provided in the SIBx. In some implementations, a frequency bitmap may be associated with a specific MBS (or its related session, or its related TMGI). In some implementations, a frequency bitmap may be associated with an MBS BWP or included in an MBS BWP configuration.

- MBS Timing bitmap: The field may be used to indicate the starting timing position of each MBS in each slot or SFN. For example, the starting timing position of the first MBS transmitted after SIBx/PDCCH used for providing configurations of MBS is t1, the starting timing position of the second MBS transmitted after SIBx/PDCCH used for providing the configurations of MBS is t2, and so on.

In some implementations, t1 (e.g., the index of an OFDM symbol in a time slot) may be the beginning symbol in the first time slot after SIBx/PDCCH used for providing the configurations of MBS, and t2 (e.g., the index of an OFDM symbol in a time slot) may be the beginning symbol in the second time slot after SIBx/PDCCH used for providing the configurations of MBS. In some implementations, the relationship between each timing (e.g., t1, t2) and MBS ID may be provided. For example, t1 may be defined as the starting timing position for MBS #1, t2 may be defined as the starting timing position for MBS #2, and so on, but not limited thereto. In some implementations, the MBS repetition may be activated by the network, and then the relationship between each timing (e.g., t1, t2) and MBS ID may be associated with the repetition number. For example, if the network configures the repetition number as 3, timing t1, t2, t3 may be defined as the starting timing position for each MBS #1 transmission, timing t4, t5, t6 may be defined as the starting timing position for each MBS #2 transmission, and so on, but not limited thereto.

In some implementations, the field (MBS Timing bitmap) may be used to indicate the timing gaps between each MBS and timing reference point. For example, the first time and frequency resource configured for MBS operation after receiving the SIBx/PDCCH used for providing configurations of MBS may be predefined as a reference point. The gap between the next MBS and the first MBS is t1, the gap between the third MBS and the first MBS is t2, and so on, where the unit of t1/t2 may be a slot, subframe, OFDM symbol, and so on, but not limited thereto. In some implementations, the field may be used to indicate a common timing gap between each MBS, where the unit of the common timing gap may be a slot, subframe, OFDM symbol, and so on, but not limited thereto. In some implementations, the starting timing position of the first configured MBS after SIBx/PDCCH used for providing configurations of MBS may be pre-defined (e.g., the first time slot after the SIBx/PDCCH used for providing the configurations of MBS) or provided in the SIBx. In some implementations, a timing bitmap may be associated with a specific MBS (or its related session, or its related TMGI). In some implementations, a timing bitmap may be associated with an MBS BWP or included in an MBS BWP configuration.

In some implementations, the ordering of the MBSs within an MBS BWP may follow the rules: first, in increasing order of frequency resource indexes for frequency-multiplexed MBSs; second, in increasing order of time resource indexes for time-multiplexed MBSs

- Reference point: The field may be used to indicate the reference time/frequency point of MBS. For example, the field may inform the UE that the reference timing reference point is the beginning of the first slot after the SIBx/PDCCH used for providing the configurations of MBS. In some implementations, a reference point may be associated with a specific MBS (or its related session, or its related TMGI). In some implementations, a reference point may be associated with an MBS BWP or included in an MBS BWP configuration.

- PUCCH resources: The field may be used to provide the PUCCH resources for each MBS-interested UE to report some information after receiving the MBS data, such as ACK/NACK, channel state information, and so on, but not limited thereto. For example, the field may provide the common timing/frequency gap, e.g., 0 RB and 1 subframe, between PUCCH resources and each MBS. In some implementations, the frequency gap may be 0, and the field may only provide the timing gap. In some implementations, a set of PUCCH resources (or the corresponding PUCCH configuration) may be associated with a specific MBS (or its related session, or its related TMGI). In some implementations, a set of PUCCH resources (or the corresponding PUCCH configuration) may be associated with an MBS BWP or included in an MBS BWP configuration.

In some implementations, if a UE is interested to receive an MBS, the UE may send an MBS request to the gNB, and then the gNB may transmit, to the UE, a dedicated signal including the information of the MBS, such as control information, configuration information of physical resources transmitting the control information of the MBS, configuration information of physical resources transmitting data of the MBS, and so on, but not limited thereto.

In some implementations, the identity of the MBS may be configured via MIB or SIBx. If the UE is interested in the MBS, the UE may acquire the identity of the MBS from the MIB or SIBx first, and then the UE may send its MBS ID to the gNB to request the corresponding MBS. In some implementations, the identity of the MBS may be predefined in the UE. In some implementations, the MBS ID may be predefined. For example, MBS #1 represents the public safety service, MBS #2 represents the IP TV service, MBS #3 represents the V2X application service, and so on, but not limited thereto. If the UE is interested to receive MBS, the UE may send the identity of its MBS (or its related session, or its related TMGI) to the gNB to request MBS. Then the gNB may deliver that MBS data to the UE via PTP or PTM transmission.

In some implementations, 2 CORESETs (or search space sets) may be configured to carry the control information for PTP and PTM transmission, respectively. For example, the NW may configure CORESET #1 to be used for carrying the control information of PTP transmission and CORESET #2 to be used for carrying the control information of PTM transmission. The UE may monitor CORESET #1 or CORESET #2 according to a specific RNTI assigned by the gNB. The specific RNTI may be configured by the network. In addition, the specific RNTI may be associated with a common RNTI (e.g., SI-RNTI, RA-RNTI, SFI-RNTI, and so on, but not limited thereto), MBS session ID, PTP/PTM transmission (e.g., '1' indicates PTM transmission and '0' indicates PTP transmission), TMGI, MBS ID, BWP ID, and so on, but not limited thereto.

In some implementations, the following information related to an MBS may be carried in the system information (e.g., existing SIB, MBS-dedicated SIBx, and so on, but not limited thereto):

- Control channel change notification for MBS

The field may be used to inform the UE of the current status of the MBS, such as the start of session or the end of session. In some implementations, the UE may read the system information to acquire the change notification for the MBS. The UE may determine whether to start/stop MBS reception according to the change notification for the MBS. For example, if the change notification field carried in the system formation indicates that the status of the UE's desired MBS session is 'started', the UE may start the MBS reception; otherwise, the UE may not start the MBS reception. If the UE has already started the MBS reception, the UE may suspend the MBS reception once the change notification field carried in the system formation indicates the status of the UE's desired MBS session is 'stop'. In some implementations, this field may indicate the status of MBS sessions by a binary sequence. The number of sessions in each MBS and the MBS session IDs may be indicated in the system information. For example, if the number of sessions is 16, the length of the sequence may be 16. If the sequence is '0111001010010011', it means that the MBS session #1 is stopped, the MBS session #2 is started, the MBS session #3 is started, and so on. For another example, the length of the sequence is predefined as 32. If the number of sessions is 16, it will reserve the 16 least significant bits (LSBs) in the 32 bits, e.g., '0111001010010011NNNNNNNNNNNNNNNN', where 'N' means NULL.

In some implementations, several MBSs may be operated in the same BWP and/or an MBS may be operated in several BWPs. For example, the NW may indicate that an MBS #1 (or MBS ID 1, or MBS1, or $MBS_{ID}$ =1) may be provided in three BWPs (e.g., BWP #2. BWP #3, and BWP #4) and an MBS #2 may be provided in a BWP (e.g., BWP #2). The corresponding BWP configuration associated with an MBS may be provided via broadcasting system information or dedicated signaling. In some implementations, an MBS-capable UE may be configured with more than 4 BWP configurations. In some implementations, the number of BWPs (except the current active BWP) the MBS-capable UE is allowed to monitor/receive simultaneously for MBS data may be based on the UE capability or NW instruction.

- MBS BWP activated/deactivated (occupancy indicator)

The field (occupancy indicator) may be used to inform the UE that the current MBS BWP is already used for MBS transmission and the UE may not receive or transmit any signal except an MBS signal.

In some implementations, non-MBS DL/UL data may also be transmitted in the MBS BWP if the MBS is deactivated. If the NW is ready to broadcast/multicast MBS data, the status of MBS may be switched from 'deactivated' to 'activated', and then the NW may broadcast such MBS status to all UEs operating in the current MBS BWP via system information (e.g., non-MBS-dedicated SIBs, MBS-dedicated SIBs, or both non-MBS-dedicated SIBs and MBS-dedicated SIBs) or DCI. If the status of MBS is 'activated', the UEs may interrupt/stop/suspend the data transmission/reception and switch to another BWP to continue the data transmission/reception. In some implementations, when a UE not interested in MBS receives an occupancy indicator, the UE may switch to a predefined BWP or an initial BWP according to the predefined rule. In some implementations, the NW may configure 2 BWPs to the UE, where one BWP may be used for MBS transmission (also referred to as the MBS BWP), and the other one may be used for non-MBS transmission. The network may inform a UE not interested in MBS to operate in the MBS BWP if there is no MBS transmission on the MBS BWP. If the UE not interested in MBS operates in the MBS BWP, once the UE receives the occupancy indicator, the UE may switch to the other BWP preconfigured by the NW, which is the BWP used for non-MBS transmission.

In some implementations, when the status of MBS is changed to 'activated', the UEs operating in the MBS BWP may interrupt/stop/suspend the data transmission/reception, and then the UEs may monitor the DCI format with CRC scrambled by their own C-RNTI in the UE-specific search space to obtain a new resource allocation (e.g., where to receive DL data and the configured/dynamic grant for UL transmission).

In some implementations, the status of MBS may be switched from 'activated' to 'deactivated', and then an MBS-interested UE may switch from the RRC_CONNECTED state to the RRC_INACTIVE/RRC_IDLE state if the UE does not need to receive any MBS data. If the UE still has other MBS data to be received or the UE still does not finish the previous MBS data reception, the UE may monitor the DCI format with CRC scrambled by MBS-related RNTI, such as Group RNTI (or G-RNTI), MBMS-RNTI (or M-RNTI), a new RNTI used for MBS, and so on, but not limited thereto, in a common search space or an MBS-dedicated search space.

In some implementations, the status of MBS may be switched from 'activated' to 'deactivated', and then an MBS-interested UE may switch from the RRC_CONNECTED state to the RRC_INACTIVE/RRC_IDLE state if the UE does not need to receive any MBS data. If the UE still has other MBS data to be received or the UE still does not finish the previous MBS data reception, the UE may monitor the DCI format with CRC scrambled by an MBS-related RNTI, such as C-RNTI, MCS-C-RNTI, a new RNTI used for MBS, and so on, but not limited thereto, in a UE-specific search space.

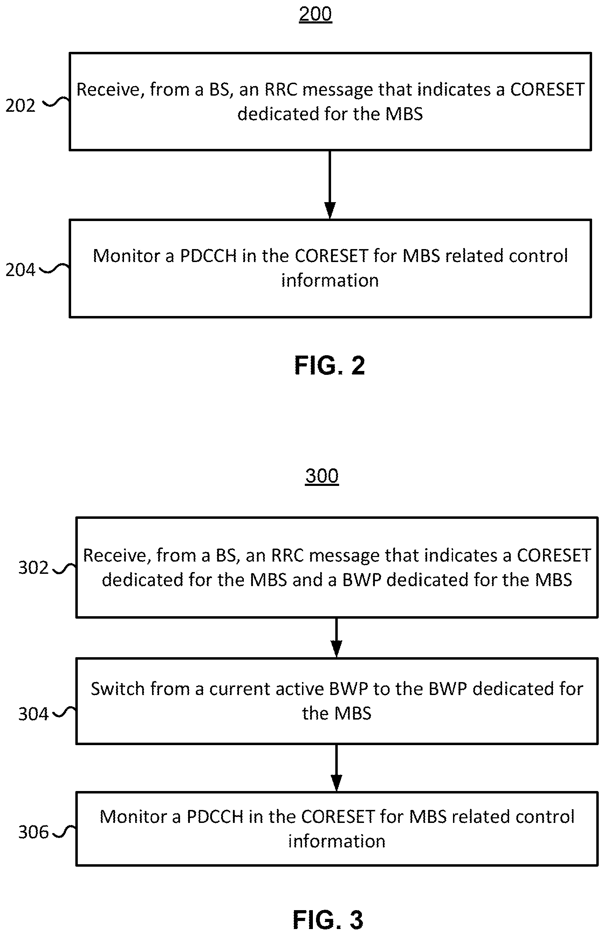

FIG. 2 is a flowchart illustrating a method 200 for MBS performed by a UE according to an example implementation of the present disclosure. In action 202, the UE receives, from a BS, an RRC message that indicates a CORESET dedicated for the MBS. In action 204, the UE monitors a PDCCH in the CORESET for MBS-related control information. The CORESET dedicated for the MBS is beneficial for DCI decoding reliability since only MBS-related DCI can be transmitted in the CORESET dedicated for the MBS. In one implementation, the CORESET may be associated with multiple search spaces, and each of the search spaces has a search space ID. Each search space ID may be associated with at least one MBS ID. Each MBS ID may correspond to a type of MBS, such as public safety, mission-critical services, V2X applications, IPTV, and IoT applications. In one implementation, the UE monitors the PDCCH in a common search space (CSS) associated with the CORESET. In one implementation, the RRC message received in action 202 may further indicate that the CSS is dedicated for the MBS.

In one implementation, the UE may use an RNTI related to the MBS (e.g., M-RNTI) for monitoring the PDCCH in the CORESET. In one implementation, the UE may use a group-common RNTI (e.g., G-RNTI) for monitoring the PDCCH in the CORESET. In one implementation, the UE may use a UE-specific RNTI (e.g., C-RNTI, MCS-C-RNTI) for monitoring the PDCCH in the CORESET.

In one implementation, the UE may obtain DCI when monitoring PDCCH in action 204. The DCI may include the MBS-related control information. In one implementation, the DCI schedules a PDSCH for the MBS. In one implementation, the UE may decode the PDSCH for the MBS according to at least one of an MBS ID and an RNTI related to the MBS.

FIG. 3 is a flowchart illustrating a method 300 for MBS performed by a UE according to another example implementation of the present disclosure. In action 302, the UE receives, from a BS, an RRC message that indicates a CORESET dedicated for the MBS and a BWP dedicated for the MBS. The CORESET dedicated for the MBS may be in the BWP dedicated for the MBS. In action 304, the UE switches from a current active BWP to the BWP dedicated for the MBS. In action 306, the UE monitors a PDCCH in the CORESET for MBS-related control information. Action 306 (PDCCH monitoring) may be performed after action 304 (BWP switching).

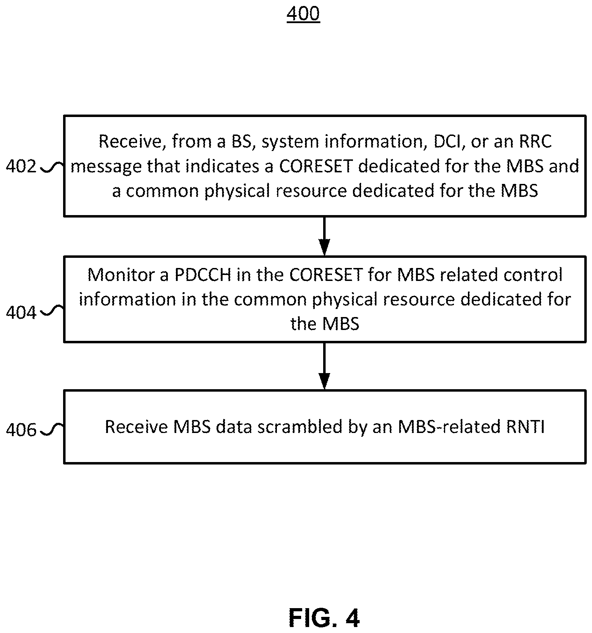

FIG. 4 is a flowchart illustrating a method 400 for MBS performed by a UE according to still another example implementation of the present disclosure. In action 402, the UE receives, from a BS, system information, DCI, or an RRC message that indicates a CORESET dedicated for the MBS and a common physical resource dedicated for the MBS. The common physical resources in the present disclosure may include common frequency resource(s), common time resource(s), and common BWP(s). In action 404, the UE monitors a PDCCH in the CORESET for MBS-related control information in the common physical resource dedicated for the MBS. In action 406, the UE receives MBS data scrambled by an MBS-related RNTI. In one implementation, the MBS-related control information obtained in action 404 may schedule a PDSCH for MBS data. In action 406, the UE may decode the PDSCH for the MBS according to the MBS-related RNTI (e.g., M-RNTI, SC-RNTI, G-RNTI, a new RNTI related to MBS designed for NR).

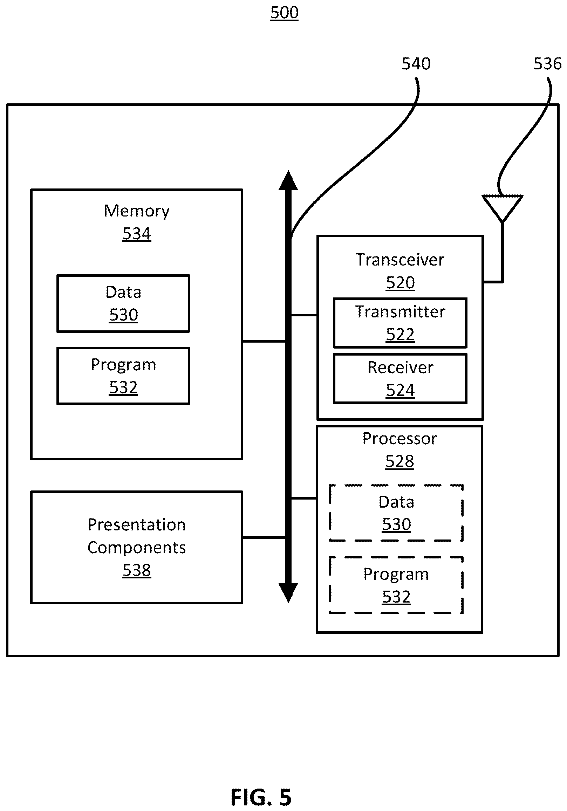

FIG. 5 is a block diagram illustrating a node 500 for wireless communication in accordance with various aspects of the present disclosure. As illustrated in FIG. 5, a node 500 may include a transceiver 520, a processor 528, a memory 534, one or more presentation components 538, and at least one antenna 536. The node 500 may also include a radio frequency (RF) spectrum band module, a BS communications module, a network communications module, and a system communications management module, Input / Output (I/O) ports, I/O components, and a power supply (not illustrated in FIG. 5).

Each of the components may directly or indirectly communicate with each other over one or more buses 540. The node 500 may be a UE or a BS that performs various functions disclosed with reference to FIGS. 1 through 4.

The transceiver 520 has a transmitter 522 (e.g., transmitting/transmission circuitry) and a receiver 524 (e.g., receiving/reception circuitry) and may be configured to transmit and/or receive time and/or frequency resource partitioning information. The transceiver 520 may be configured to transmit in different types of subframes and slots including but not limited to usable, non-usable and flexibly usable subframes and slot formats. The transceiver 520 may be configured to receive data and control channels.

The node 500 may include a variety of computer-readable media. Computer-readable media may be any available media that may be accessed by the node 500 and include volatile (and/or non-volatile) media and removable (and/or non-removable) media.

The computer-readable media may include computer-storage media and communication media. Computer-storage media may include both volatile (and/or non-volatile media), and removable (and/or non-removable) media implemented in any method or technology for storage of information such as computer-readable instructions, data structures, program modules or data.

Computer-storage media may include RAM, ROM, EPROM, EEPROM, flash memory (or other memory technology), CD-ROM, Digital Versatile Disks (DVD) (or other optical disk storage), magnetic cassettes, magnetic tape, magnetic disk storage (or other magnetic storage devices), etc. Computer-storage media may not include a propagated data signal. Communication media may typically embody computer-readable instructions, data structures, program modules or other data in a modulated data signal such as a carrier wave or other transport mechanisms and include any information delivery media.

The term "modulated data signal" may mean a signal that has one or more of its characteristics set or changed in such a manner as to encode information in the signal. Communication media may include wired media such as a wired network or direct-wired connection, and wireless media such as acoustic, RF, infrared, and other wireless media. Combinations of any of the previously listed components should also be included within the scope of computer-readable

**EP 4 118 786 B1**

media.

The memory 534 may include computer-storage media in the form of volatile and/or non-volatile memory. The memory 534 may be removable, non-removable, or a combination thereof. Example memory may include solid-state memory, hard drives, optical-disc drives, etc. As illustrated in FIG. 5, the memory 534 may store a computer-readable and/or computer-executable program 532 (e.g., software codes) that are configured to, when executed, cause the processor 528 to perform various functions disclosed herein, for example, with reference to FIGS. 1 through 4. Alternatively, the program 532 may not be directly executable by the processor 528 but may be configured to cause the node 500 (e.g., when compiled and executed) to perform various functions disclosed herein.

The processor 528 (e.g., having processing circuitry) may include an intelligent hardware device, e.g., a Central Processing Unit (CPU), a microcontroller, an ASIC, etc. The processor 528 may include memory. The processor 528 may process the data 530 and the program 532 received from the memory 534, and information transmitted and received via the transceiver 520, the baseband communications module, and/or the network communications module. The processor 528 may also process information to send to the transceiver 520 for transmission via the antenna 536 to the network communications module for transmission to a CN.

One or more presentation components 538 may present data indications to a person or another device. Examples of presentation components 538 may include a display device, a speaker, a printing component, a vibrating component, etc.

In view of the present disclosure, it is obvious that various techniques may be used for implementing the disclosed concepts. Moreover, while the concepts have been disclosed with specific reference to certain implementations, a person of ordinary skill in the art may recognize that changes may be made in form and details. As such, the disclosed implementations are to be considered in all respects as illustrative and not restrictive. It should also be understood that the present disclosure is not limited to the particular implementations disclosed and many rearrangements, modifications, and substitutions are possible. The invention is defined by the appended claims.

**Claims**

1. A method for multicast/broadcast services, MBS, performed by a user equipment, UE (500), the method comprising:

    receiving, from a base station, BS, a first Radio Resource Control, RRC, message that indicates a control resource set, CORESET, dedicated for the MBS and a common search space, CSS, that is dedicated for the MBS and associated with the CORESET; and
    monitoring MBS Downlink Control Information, DCI, for MBS-related control information in the CSS that is dedicated for the MBS and associated with the CORESET,
    wherein:

       the MBS DCI comprises a DCI format with cyclic redundancy check, CRC, scrambled by a Radio Network Temporary Identifier, RNTI, related to the MBS, and
       the MBS DCI includes an MBS change notification for indicating a start of an MBS session.

2. The method of claim 1, further comprising receiving, from the BS, a second RRC message that indicates physical resources for the MBS.

3. The method of claim 2, wherein the physical resources for the MBS comprise common frequency resources.

4. The method of claim 2, wherein:
   the physical resources for the MBS comprise a bandwidth part, BWP.

5. The method of claim 1, wherein the RNTI related to the MBS is a group-common RNTI or a cell-RNTI, C-RNTI.

6. The method of claim 5, further comprising:

    receiving a group-common Physical Downlink Shared Channel, PDSCH, scheduled by the MBS DCI,
    wherein a scrambling sequence generator for the group-common PDSCH is initialized based on the group-common RNTI associated with the MBS DCI.

7. The method of claim 1, wherein the MBS DCI further includes at least one of the following fields:

a bandwidth part, BWP, identifier, ID, related to the MBS;
an MBS repetition period;
a frequency bitmap associated with resource allocation for different MBS IDs in frequency domain; and
a timing bitmap associated with resource allocation for different MBS IDs in time domain.

**8.** A user equipment, UE (500), for multicast/broadcast services, MBS, comprising:

a processor (528); and
a memory (534) coupled to the processor, wherein the memory stores a computer-executable program that when executed by the processor, causes the processor to perform the method of any of claims 1 to 7.

**Patentansprüche**

**1.** Verfahren für Multicast-/Broadcast-Dienste, MBS, das/die durch ein Benutzergerät, UE, (500) durchgeführt wird/-werden, wobei das Verfahren umfasst:

Empfangen, von einer Basisstation, BS, einer ersten Radio Resource Control, RRC-Nachricht, die ein für die MBS dediziertes Control Resource Set, CORESET, und einen für die MBS dedizierten und mit dem CORESET verknüpften Common Search Space, CSS, angibt; und
Überwachen von MBS Downlink Control Informationen bzw. MBS-Steuerungsinformationen, DCI, für bzw. auf MBS-bezogene Steuerungsinformationen in dem für die MBS dedizierten und mit dem CORESET verknüpften CSS,
wobei:

die MBS-DCI ein DCI-Format mit zyklischer Redundanzprüfung, CRC, umfassen, das durch einen den MBS zugeordneten Radio Network Temporary Identifier, RNTI, verschlüsselt bzw. chiffriert wird, und
die MBS-DCI eine MBS-Änderungsbenachrichtigung zum Anzeigen eines Starts einer MBS-Sitzung enthalten.

**2.** Verfahren nach Anspruch 1, ferner umfassend Empfangen, von der BS, einer zweiten RRC-Nachricht, die physikalische Ressourcen für die MBS angibt.

**3.** Verfahren nach Anspruch 2, wobei die physikalischen Ressourcen für die MBS gemeinsame Frequenzressourcen umfassen.

**4.** Verfahren nach Anspruch 2, wobei:
die physikalischen Ressourcen für die MBS einen Bandbreitenteil, BWP, umfassen.

**5.** Verfahren nach Anspruch 1, wobei der den MBS zugeordnete RNTI ein gruppenweiter RNTI oder ein Zell-RNTI, C-RNTI, ist.

**6.** Verfahren nach Anspruch 5, ferner umfassend:

Empfangen eines gruppenweiten Physical Downlink Shared Channel, PDSCH, der von MBS-DCI terminiert bzw. geplant wird,
wobei ein Verschlüsselungs- bzw. Chiffrierungs-Sequenzgenerator für den gruppenweiten PDSCH basierend auf dem mit den MBS-DCI verknüpften gruppenweiten RNTI initialisiert wird.

**7.** Verfahren nach Anspruch 1, wobei die MBS-DCI ferner zumindest eines der folgenden Felder umfassen:

eine Bandbreitenteil,BWP,-Kennung, ID, die den MBS zugeordnet ist;
eine MBS-Wiederholungsperiode;
eine Frequenz-Bitmap, die mit Ressourcenzuweisung für unterschiedliche MBS-IDs im Frequenzbereich verknüpft ist; und
eine Timing-Bitmap, die mit Ressourcenzuweisung für unterschiedliche MBS-IDs im Zeitbereich verknüpft ist.

**8.** Benutzergerät, UE, (500), für Multicast-/Broadcast-Dienste, MBS, umfassend:

einen Prozessor (528); und

einen Speicher (534), der mit dem Prozessor gekoppelt ist, wobei der Speicher ein computerausführbares Programm speichert, das, wenn es von dem Prozessor ausgeführt wird, den Prozessor veranlasst, das Verfahren nach einem der Ansprüche 1 bis 7 durchzuführen.

**Revendications**

1. Procédé pour des services de multidiffusion/diffusion, MBS, réalisés par un équipement utilisateur, UE (500), le procédé comprenant :

recevoir, d'une station de base, BS, un premier message de commande de ressources radio, RRC, qui indique un ensemble de ressources de commande, CORESET, dédié aux MBS et un espace de recherche commun, CSS, qui est dédié aux MBS et associé au CORESET ; et

surveiller des informations de commande de liaison descendante, DCI, de MBS pour des informations de commande liées aux MBS dans le CSS qui est dédié aux MBS et associé au CORESET,

dans lequel :

les MBS DCI comprennent un format de DCI avec contrôle par redondance cyclique, CRC, brouillé par un identifiant temporaire de réseau radio, RNTI, lié aux MBS, et

les MBS DCI incluent une notification de changement de MBS pour indiquer un début d'une session de MBS.

2. Procédé selon la revendication 1, comprenant en outre recevoir, de la BS, un second message de RRC qui indique des ressources physiques pour les MBS.

3. Procédé selon la revendication 2, dans lequel les ressources physiques pour les MBS comprennent des ressources de fréquence communes.

4. Procédé selon la revendication 2, dans lequel :
les ressources physiques pour les MBS comprennent une partie de largeur de bande, BWP.

5. Procédé selon la revendication 1, dans lequel le RNTI lié aux MBS est un RNTI commun au groupe ou un RNTI cellulaire, C-RNTI.

6. Procédé selon la revendication 5, comprenant en outre :

recevoir un canal partagé de liaison descendante physique, PDSCH, commun au groupe, planifié par les MBS DCI,

dans lequel un générateur de séquence de brouillage pour le PDSCH commun au groupe est initialisé en fonction du RNTI commun au groupe associé aux MBS DCI.

7. Procédé selon la revendication 1, dans lequel les MBS DCI incluent en outre au moins un des champs suivants :

un identifiant, ID, de partie de largeur de bande, BWP, lié aux MBS ;

une période de répétition de MBS ;

un bitmap de fréquence associé à l'allocation de ressources pour différents MBS ID dans le domaine de fréquence ; et

un bitmap de rythme associé à l'allocation de ressources pour différents MBS ID dans le domaine temporel.

8. Équipement utilisateur, UE (500), pour des services de multidiffusion/diffusion, MBS, comprenant :

un processeur (528) ; et

une mémoire (534) couplée au processeur, dans lequel la mémoire stocke un programme exécutable par ordinateur qui amène le processeur à réaliser le procédé selon l'une quelconque des revendications 1 à 7 lors de son exécution par le processeur.

100A

**FIG. 1A**

100B

**FIG. 1B**

200

| |
|---|
| Receive, from a BS, an RRC message that indicates a CORESET dedicated for the MBS |

202

| |
|---|
| Monitor a PDCCH in the CORESET for MBS related control information |

204

## FIG. 2

300

| |
|---|
| Receive, from a BS, an RRC message that indicates a CORESET dedicated for the MBS and a BWP dedicated for the MBS |

302

| |
|---|
| Switch from a current active BWP to the BWP dedicated for the MBS |

304

| |
|---|
| Monitor a PDCCH in the CORESET for MBS related control information |

306

## FIG. 3

400

```
┌─────────────────────────────────────────────────────────┐
│        Receive, from a BS, system information, DCI, or an RRC    │
│ 402 ∿│ message that indicates a CORESET dedicated for the MBS and │
│        a common physical resource dedicated for the MBS          │
└─────────────────────────────────────────────────────────┘
                              │
                              ▼
┌─────────────────────────────────────────────────────────┐
│        Monitor a PDCCH in the CORESET for MBS related control    │
│ 404 ∿│ information in the common physical resource dedicated for │
│                            the MBS                               │
└─────────────────────────────────────────────────────────┘
                              │
                              ▼
┌─────────────────────────────────────────────────────────┐
│ 406 ∿│   Receive MBS data scrambled by an MBS-related RNTI       │
└─────────────────────────────────────────────────────────┘
```

# FIG. 4

500

**FIG. 5**

**EP 4 118 786 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2011170472 A
- EP 2830237 A1